# EUROPÄISCHE PATENTANMELDUNG

(11) **EP 4 095 634 A1**
(43) Veröffentlichungstag der Anmeldung: **30.11.2022**
(21) Anmeldenummer: 21176028.5
(22) Anmeldetag: 26.05.2021
(51) Int. Cl.: G05B 23/02

(54) **LEITSYSTEM FÜR EINE TECHNISCHE ANLAGE**

(71) Anmelder: Siemens Aktiengesellschaft, 80333 München (DE)
(72) Erfinder: Kluge, Georg, 76351 Linkenheim (DE); Lutz, Benjamin, 76327 Pfinztal (DE)

(57) **Zusammenfassung**

Vorgeschlagen wird ein Leitsystem (1) für eine technische Anlage, welches wenigstens einen Operator Station Server (2) und ein Automatisierungsgerät (7) aufweist, wobei das Automatisierungsgerät (7) dazu ausgebildet ist, zur Laufzeit der technischen Anlage Daten von mit dem Automatisierungsgerät (7) verbindbaren technischen Objekten zu empfangen, und wobei das Automatisierungsgerät (7) einen Datenübertragungsdienst (10) aufweist, der dazu ausgebildet ist, beim Vorliegen eines oder mehrerer bestimmter Ereignisse eine ereignisorientierte Übertragung der von den technischen Objekten empfangenen Daten an den Operator Station Server (2) vorzunehmen, und wobei das Automatisierungsgerät (7) einen Alarmüberwachungsdienst (11) aufweist, der dazu ausgebildet ist, die Daten zur Laufzeit der technischen Anlage hinsichtlich eines Alarmkriteriums zu überwachen und, für den Fall, dass das Alarmkriterium erfüllt ist, eine Alarmmeldung zu erzeugen und an den Operator Station Server (2) zu übermitteln. Das Leitsystem (1) ist dadurch gekennzeichnet, dass der Alarmüberwachungsdienst dazu ausgebildet ist, den ereignisorientierten Datenübertragungsdienst (10) für den Fall, dass das Alarmkriterium erfüllt ist, zum unverzüglichen Übertragen wenigstens einer Teilmenge der von den technischen Objekten empfangenen Daten zu triggern, und dass der Datenübertragungsdienst (10) dazu ausgebildet ist, in Reaktion auf den empfangenen Trigger eine unverzügliche Übertragung wenigstens einer Teilmenge der von den technischen Objekten empfangenen Daten an den Operator Station Server (2) vorzunehmen.

## Beschreibung

Die Erfindung betrifft ein Leitsystem für eine technische Anlage, welches wenigstens einen Operator Station Server und ein Automatisierungsgerät aufweist, wobei das Automatisierungsgerät dazu ausgebildet ist, zur Laufzeit der technischen Anlage Daten von mit dem Automatisierungsgerät verbindbaren technischen Objekten zu empfangen, und wobei das Automatisierungsgerät einen Datenübertragungsdienst aufweist, der dazu ausgebildet ist, beim Vorliegen eines oder mehrerer bestimmter Ereignisse eine ereignisorientierte Übertragung der von den technischen Objekten empfangenen Daten an den Operator Station Server vorzunehmen, und wobei das Automatisierungsgerät einen Alarmüberwachungsdienst aufweist, der dazu ausgebildet ist, die Daten zur Laufzeit der technischen Anlage hinsichtlich eines Alarmkriteriums zu überwachen und, für den Fall, dass das Alarmkriterium erfüllt ist, eine Alarmmeldung zu erzeugen und an den Operator Station Server zu übermitteln.

Außerdem betrifft die Erfindung ein Verfahren und eine Verwendung eines Leitsystems zum Betrieb einer technischen Anlage.

Prozessdaten der Prozessautomatisierung sind in der Regel "träger" als in der Fabrikautomatisierung. Dementsprechend werden für die Übertragung von Prozessdaten zwischen Automatisierungen und Operator Station Servern (für die Bedienung und Beobachtung, Archivierung, usw.) in der Regel ereignisgesteuert und nicht zeitgesteuert (zyklisch) übertragen. Ziel ist es hierbei das Übertragungsaufkommen zu reduzieren, da insbesondere bei verfahrenstechnischen Anlagen große Mengengerüste an Prozessdaten vorhanden sind. Dies wird bei der ereignisgesteuerten Übertragung durch ein "Ausdünnen" erreicht. Ausdünnen bedeutet hierbei, dass Prozessdaten nur übertragen werden, wenn eines oder mehrere der folgenden Ereignisse auftreten:
- Eine hinreichend große Änderung eines Betrages der Prozessdaten
- Nach Ablauf einer bestimmten Zeitdauer
- Bei einer hinreichend großen Menge von akkumulierten Änderungen

Um bei starken Signaländerungen (z.B. durch verstärktes Rauschen, Ausfall von Sensorik...) einen Schwall bei der ereignisgesteuerten Übertragung zu deckeln, wird in der Regel noch ein unteres Timeout für die ereignisgesteuerte Übertragung definiert (maximale Übertragungsrate).

Neben Prozessdaten werden durch die Automatisierungen auch Alarme (Meldungen) an Operator Station Servern übertragen, .

Diese Alarme entstehen beispielsweise, wenn vorbestimmte verfahrenstechnische Grenzwerte (Füllstand eines Tanks, Drehzahl einer Turbine, usw.) überschritten werden, so dass Operatoren in derartigen Ausnahmefällen wirkungsvoll gegensteuern können. Verfahrenstechnische Alarme sind in aller Regel "schwergewichtig". Dies bedeutet, dass neben dem eigentlichen verfahrenstechnischen Ereignis auch zahlreiche Begleitwerte bereitgestellt werden müssen (der sogenannte Kontext), um für die Bedienung und Beobachtung genügend Kontext bereitstellen zu können. Typische Begleitwerte sind dabei:
- Meldetexte, die die Alarmursache beschreiben
- Alarmzustände (gekommen, gegangen, quittiert und dergleichen)
- Zeitstempel
- Primärer Prozesswert zum Zeitpunkt der Alarmauslösung
- Anwenderdefinierbare Prozesswerte wie z.B. weitere Prozesswerte neben dem primären Prozesswert
- Laufender primärer Prozesswert, um den Trend des Alarms erfassen zu können (zunehmende/abnehmende Kritikalität)
- Name des alarmauslösenden Prozessobjekts
- Technologischer Pfad des alarmauslösenden Prozessobjekts

Um Überlastungen in den Automatisierungen oder auf den Übertagungswegen vorzubeugen, ist es bekannt, nicht alle Begleitwerte von der Automatisierung in den Operator Station Server übertragen. Von der Automatisierung in den Operator Station Server können vielmehr nur rudimentäre Anteile des Alarms übertragen - zumeist nur das Ereignis selbst. Erst im Operator Station Server wird der Alarm um die für die Bedienung und Beobachtung notwendigen Begleitwerte ergänzt. Statische Begleitwerte, wie beispielweise Meldetexte, Namen, Pfade usw., werden in einer Engineering-Phase der Prozessanlage vorprojektiert und in den Operator Station Server geladen. Dynamische Begleitwerte werden dem Prozessabbild des Operator Station Servers entnommen, da diese dort ohnehin durch die ereignisorientierte Übertragung der für die Bedienung und Beobachtung relevanten Prozesswerte von der Automatisierung in den Operator Station Server vorhanden sind.

Diese Handhabe bringt einen entscheidenden Nachteil mit sich: In Abhängigkeit der Parametrierung der ereignisorientierten Übertragung von Prozesswerten (Hysterese, Timeout...), des Prozesses (schnelle Druckänderungen vs. träge Temperaturänderungen, und/oder der Auslastung der Automatisierung, des Netzwerks oder des Operator Station Server können die dem Prozessabbild entnommenen Prozesswerte zeitlich nicht mit dem ausgelösten Alarm korrespondieren.

Wird beispielsweise bei einem schnellen Druckanstieg bei einer vordefinierten Grenze von 50 Bar durch die Automatisierung ein Alarm gemeldet und wird der Alarm im Operator Station Server um den primären Prozesswert aus dem Prozessabbild ergänzt, kann sich dieser von der alarmauslösenden Grenze unterscheiden, so dass in der Bedienung und Beobachtung ein 50 Bar Grenzwertalarm mit einem Prozesswert von 49 Bar angezeigt wird (und auch umgekehrt bei fallenden Werten).

Dies kann unterschiedliche negative Konsequenzen wie Fehlbedienungen oder die Annahme, dass es Probleme mit der Automatisierung gibt (was nicht der Fall ist), mit sich bringen. Auch wenn es, wie beschrieben, sinnvoll ist, Alarme erst im Operator Station Server mit bestimmten Begleitwerten anzureichen, führt dieses Vorgehen zu Nachteilen, was die zeitliche Synchronität zwischen gemeldetem Alarm und dem begleitenden Prozesswert betrifft.

Die US 2019/171196 A1 offenbart einen Operator Station Server eines Leitsystems, der Prozessdaten eines Automatisierungsgeräts empfängt, wobei zu denen Prozessdaten unter anderem Prozessmesswerte und Alarmmeldungen gehören. Auch in der EP 3 480 672 A1 ist ein solcher Operator Station Server offenbart.

In der DE 10 2018 124 358 A1 ist eine graphische Anzeige einer Prozessanlage mit dynamisierten Objekten wie einer Füllstandsanzeige offenbart.

Der Erfindung liegt die Aufgabe zugrunde, ein Leitsystem für eine technische Anlage anzugeben, welches eine effizientere Bedienung und Beobachtung durch einen Operator der technischen Anlage ermöglicht.

Die zuvor formulierte Aufgabe wird durch ein Leitsystem für eine technische Anlage mit den Merkmalen des Anspruchs 1 gelöst. Das Leitsystem weist wenigstens einen Operator Station Server und ein Automatisierungsgerät auf. Das Automatisierungsgerät ist dabei dazu ausgebildet, zur Laufzeit der technischen Anlage Daten von mit dem Automatisierungsgerät verbindbaren technischen Objekten zu empfangen. Zudem weist das Automatisierungsgerät einen Datenübertragungsdienst auf, der dazu ausgebildet ist, beim Vorliegen eines oder mehrerer bestimmter Ereignisse eine ereignisorientierte Übertragung der von den technischen Objekten empfangenen Daten an den Operator Station Server vorzunehmen. Zudem weist das Automatisierungsgerät einen Alarmüberwachungsdienst auf, der dazu ausgebildet ist, die Daten zur Laufzeit der technischen Anlage hinsichtlich eines Alarmkriteriums zu überwachen und, für den Fall, dass das Alarmkriterium erfüllt ist, eine Alarmmeldung zu erzeugen und an den Operator Station Server zu übermitteln.

Das erfindungsgemäße Leitsystem ist dadurch gekennzeichnet, dass der Alarmüberwachungsdienst dazu ausgebildet ist, den ereignisorientierten Datenübertragungsdienst für den Fall, dass das Alarmkriterium erfüllt ist, zum unverzüglichen Übertragen wenigstens einer Teilmenge der von den technischen Objekten empfangenen Daten zu triggern. Weiterhin ist das Leitsystem dadurch gekennzeichnet, dass der Datenübertragungsdienst dazu ausgebildet ist, in Reaktion auf den empfangenen Trigger eine unverzügliche Übertragung wenigstens einer Teilmenge der von den technischen Objekten empfangenen Daten an den Operator Station Server vorzunehmen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem kann zusätzlich Sensoren zur Ermittlung von Messwerten sowie verschiedene Aktoren umfassen. Zudem kann das Leitsystem zusätzlich sogenannte prozessnahe Komponenten umfassen, die zur Ansteuerung der Aktoren bzw. Sensoren dienen.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern (sogenannten Operatoren) zur Verfügung stellt. Der Operator Station Server stellt in der Regel eine Kommunikationsverbindung zu Automatisierungssystemen der technischen Anlage her und gibt Daten der technischen Anlage an den sogenannten Operator Station Client weiter, die zur Bedienung und Beobachtung eines Betriebs der einzelnen Funktionselemente der technischen Anlage dienen.

Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem technischen Objekt wird eine abgeschlossene technische Einheit verstanden, die in eine übergeordnete Steuerungsebene integrierbar ist. Ein solches technisches Objekt kann zum Beispiel ein Zusammenschluss mehrerer Messstellen oder ein größerer Anlagenteil einer industriellen Anlage sein. Das technische Objekt muss aber nicht dem Feld der Industrieanlagen entstammen, sondern kann beispielsweise auch ein Motormodul eines Automobils, eines Schiffs oder dergleichen sein.

Unter einer Automatisierung wird die selbständige (automatisierte) Erfassung und Beeinflussung physikalischer Größen mithilfe technischer Mittel verstanden. Dabei werden in der Regel Maschinen, Anlagen oder sonstige Einrichtungen in die Lage versetzt, selbsttätig zu arbeiten. Automatisierungsgeräte werden zur Realisierung einer Automatisierung benutzt und können beispielsweise speicherprogrammierbare Steuerungen sein, die eine übergeordnete Steuerungsfunktion für untergeordnete speicherprogrammierbare Steuerungen darstellen. Ein Beispiel für ein solches Automatisierungsgerät ist das "Automatisierungssystem AS 410-5H" der Firma SIEMENS.

Das erfindungsgemäße Leitsystem vermeidet die im einleitenden Teil beschriebenen Nachteile bekannter Leitsysteme technischer Anlagen. Eine Datenübertragung zwischen Automatisierungsgerät und Operator Station Server findet grundsätzlich ereignisgesteuert statt, was die Kommunikationslast in an sich bekannter Weise verringert. Um eine zeitliche Synchronität zwischen einer Alarmmeldung, die von dem Automatisierungsgerät an den Operator Station Server übertragen wird, und von dem Automatisierungsgerät an den Operator Station Server übertragenen Daten der technischen Objekte zu erreichen, sieht das erfindungsgemäße Leitsystem in besonders vorteilhafter Weise vor, eine durch die Erzeugung der Alarmmeldung getriggerte Datenübertragung anzustoßen. Es war bislang nicht bekannt, die Erzeugung einer Alarmmeldung in dem Automatisierungsgerät als ein Ereignis festzulegen, das die Datenübertragung zwischen dem Automatisierungsgerät und dem Operator Station Server triggert.

Bevorzugt ist der Alarmüberwachungsdienst dazu ausgebildet, den ereignisorientierten Datenübertragungsdienst für den Fall, dass das Alarmkriterium erfüllt ist, zum unverzüglichen Übertragen derjenigen von den technischen Objekten empfangenen Daten zu triggern, die von der Alarmmeldung betroffen sind. Dabei ist der Datenübertragungsdienst dazu ausgebildet, in Reaktion auf den empfangenen Trigger eine unverzügliche Übertragung derjenigen von den technischen Objekten empfangenen Daten, die von der Alarmmeldung betroffen sind, an den Operator Station Server vorzunehmen. Daten können dabei von der Alarmmeldung betroffen sein, wenn sie einem technischen Objekt wie einem Sensor entstammen, welcher Messwerte an das Automatisierungsgerät übermittelt haben, die die Erzeugung der Alarmmeldung ausgelöst haben. Mit anderen Worten sind die Daten, die von der Alarmmeldung betroffen sind, die alarmauslösenden Daten.

Ein Ereignis für die ereignisorientierte Übertragung der von den technischen Objekten empfangenen Daten an den Operator Station Server kann ein hinreichend großer Betrag einer Änderung der Daten seit einer vorherigen Übertragung darstellen.

Ein Ereignis für die ereignisorientierte Übertragung der von den technischen Objekten empfangenen Daten an den Operator Station Server kann auch ein Ablauf einer bestimmten Zeitspanne seit einer vorherigen Übertragung darstellen. Der Alarmüberwachungsdienst kann in diesem Fall im Rahmen der zuvor beschriebenen Triggerung die Zeitspanne vorzeitig beenden (d.h. auf Null setzen), um die ereignisorientierte Datenübertragung des Datenübertragungsdienstes an den Operator Station Server zu initiieren.

Ein Ereignis für die ereignisorientierte Übertragung der von den technischen Objekten empfangenen Daten an den Operator Station Server kann auch ein hinreichend großer Betrag einer Summe von Änderungen der Daten seit einer vorherigen Übertragung darstellen.

Die Alarmmeldung (an sich) umfasst bevorzugt im Wesentlichen nur eine Information darüber, dass das betreffende Alarmkriterium erfüllt ist. Dies macht die Alarmmeldung sehr "schlank" und verhindert effektiv eine Belastung der Kommunikation zwischen dem Automatisierungsgerät und dem Operator Station Server.

Die obenstehende Aufgabe wird zudem gelöst durch die Verwendung eines Leitsystems, wie es zuvor erläutert wurde, zum Betrieb einer technischen Anlage.

Die obenstehende Aufgabe wird zudem gelöst durch ein Verfahren, welches die folgenden Verfahrensschritte umfasst:
a) Zu einer Laufzeit einer technischen Anlage Überwachen von Daten technischer Objekte der technischen Anlage durch einen Alarmüberwachungsdienst eines Automatisierungsgerätes eines Leitsystems der technischen Anlage hinsichtlich eines Alarmkriteriums,
b) Für den Fall, dass das Alarmkriterium erfüllt ist, Erzeugen und Übermitteln einer Alarmmeldung von dem Alarmüberwachungsdienst des Automatisierungsgerätes an den Operator Station Server,
c) Für den Fall, dass das Alarmkriterium erfüllt ist, Triggern eines Datenübertragungsdienstes des Automatisierungsgerätes zum unverzüglichen Übertragen wenigstens einer Teilmenge der von den technischen Objekten empfangenen Daten durch den Alarmüberwachungsdienst,
d) In Reaktion auf den empfangenen Trigger, unverzügliche Übertragung wenigstens einer Teilmenge der von den technischen Objekten empfangenen Daten an den Operator Station Server durch den Datenübertragungsdienst des Automatisierungsgerätes des Leitsystems der technischen Anlage.

Bevorzugt erfolgt im Verfahrensschritt c für den Fall, dass das Alarmkriterium erfüllt ist, ein Triggern des Datenübertragungsdienstes des Automatisierungsgerätes zum unverzüglichen Übertragen derjenigen von den technischen Objekten empfangenen Daten, die von der Alarmmeldung betroffen sind, durch den Alarmüberwachungsdienst. Und im Verfahrensschritt d erfolgt für den Fall, dass das Alarmkriterium erfüllt ist, in Reaktion auf den empfangenen Trigger, eine unverzügliche Übertragung derjenigen von den technischen Objekten empfangenen Daten, die von der Alarmmeldung betroffen sind, an den Operator Station Server durch den Datenübertragungsdienst des Automatisierungsgerätes des Leitsystems der technischen Anlage.

Besonders bevorzugt stellt ein Ereignis für die ereignisorientierte Übertragung der von den technischen Objekten empfangenen Daten an den Operator Station Server ein hinreichend großer Betrag einer Änderung der Daten seit einer vorherigen Übertragung dar.

Ein Ereignis für die ereignisorientierte Übertragung der von den technischen Objekten empfangenen Daten an den Operator Station Server kann auch ein Ablauf einer bestimmten Zeitspanne seit einer vorherigen Übertragung darstellen. Der Alarmüberwachungsdienst kann in diesem Fall im Rahmen der zuvor beschriebenen Triggerung die Zeitspanne vorzeitig beenden (d.h. auf Null setzen), um die ereignisorientierte Datenübertragung des Datenübertragungsdienstes an den Operator Station Server zu initiieren.

Ein Ereignis für die ereignisorientierte Übertragung der von den technischen Objekten empfangenen Daten an den Operator Station Server kann auch ein hinreichend großer Betrag einer Summe von Änderungen der Daten seit einer vorherigen Übertragung darstellen.

Besonders bevorzugt umfasst im zuvor erläuterten Verfahren die Alarmmeldung im Wesentlichen nur eine Information darüber umfasst, dass das betreffende Alarmkriterium erfüllt ist.

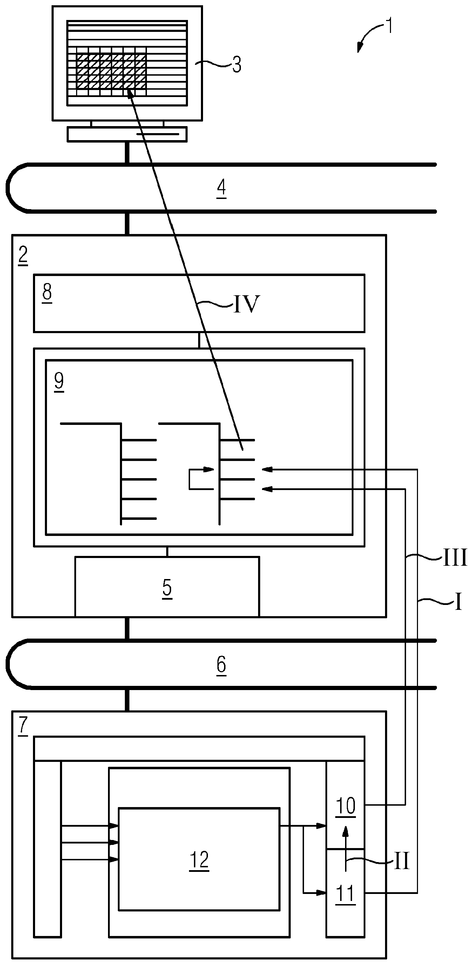

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

Die Figur zeigt einen Teil eines erfindungsgemäßen Leitsystems 1 einer als Prozessanlage ausgebildeten technischen Anlage. Das Leitsystem 1 umfasst einen Server eines Bediensystems bzw. einen Operator Station Server 2 und einen dazugehörigen Operator Station Client 3. Der Operator Station Server 2 und der Operator Station Client 3 sind über einen Terminalbus 4 miteinander und mit nicht dargestellten weiteren Komponenten des Leitsystems 1 wie einem Engineering System Server oder einem Prozessdatenarchiv verbunden.

Ein Benutzer bzw. Operator hat mittels des Operator Station Clients 3 mittels des Terminalbus 4 im Kontext eines Bedienens und Beobachtens Zugriff auf den Operator Station Server 2. Der Terminalbus 4 kann, ohne sich darauf zu beschränken, beispielsweise als Industrial Ethernet ausgebildet sein.

Der Operator Station Server 2 weist eine Geräteschnittstelle 5 auf, die mit einem Anlagenbus 6 verbunden ist. Hierüber ist der Operator System Server 2 mit einem Automatisierungsgerät 7 des Leitsystems 2 verbunden. Der Anlagenbus 6 kann, ohne sich darauf zu beschränken, beispielsweise als Industrial Ethernet ausgebildet sein. Das Automatisierungsgerät 7 kann wiederum mit einer beliebigen Anzahl an Subsystemen (nicht dargestellt) verbunden sein.

In dem Operator Station Server 2 ist ein Visualisierungsdienst 8 integriert, über den eine Übertragung von (Visualisierungs-)Daten an den Operator Station Client 3 erfolgen kann. Zudem weist der Operator Station Server 2 ein Prozessabbild (Process Image) 9 der Prozessanlage auf.

Das Automatisierungsgerät 7 weist (unter anderem) einen Datenübertragungsdienst 10, einen Alarmüberwachungsdienst 11 und einen Datenverwaltungsdienst 12 auf. Der Datenverwaltungsdienst 12 des Automatisierungsgerätes 7 empfängt zur Laufzeit der Prozessanlage (d.h. während eines Betriebs der Prozessanlage) Daten (unter anderem Prozessmesswerte) von mit dem Automatisierungsgerät 7 verbindbaren technischen Objekten (wie Sensoren) der Prozessanlage. Beim Vorliegen eines oder mehrerer bestimmter Ereignisse, die in dem Automatisierungsgerät 7 definiert hinterlegt worden sind (bei einer Projektierung/Engineering der Prozessanlage), führt der Datenübertragungsdienst 10 prinzipiell eine ereignisorientierte Übertragung der von den technischen Objekten empfangenen Daten an den Operator Station Server 2 durch. Der Alarmüberwachungsdienst 11 ist dazu ausgebildet, die von dem oder den technischen Objekten empfangenen Daten zur Laufzeit der Prozessanlage hinsichtlich eines Alarmkriteriums zu überwachen und, für den Fall, dass das Alarmkriterium erfüllt ist, eine Alarmmeldung zu erzeugen und an den Operator Station Server 2 zu übermitteln. Die empfangenen Daten und die Alarmmeldung können einem Operator mittels des Operator Station Clients 3 in einem Anlagenbild oder dergleichen visualisiert werden. Auch eine Datenübertragung in eine Cloudumgebung oder dergleichen kann erfolgen.

Im Folgenden wird der Ablauf eines erfindungsgemäßen Verfahrens erläutert: Zu einer Laufzeit der Prozessanlage überwacht der Alarmüberwachungsdienst 11 Daten der technischen Objekte der Prozessanlage hinsichtlich eines Alarmkriteriums (beispielsweise der Überschreitung eines Schwellwertes). Für den Fall, dass das Alarmkriterium erfüllt ist, erzeugt der Alarmüberwachungsdienst 11 eine Alarmmeldung und übermittelt diese an den Operator Station Server 2 (Schritt I in der Figur). Für den Fall, dass das Alarmkriterium erfüllt ist, triggert der Alarmüberwachungsdienst 11 den Datenübertragungsdienst 10 des Automatisierungsgerätes 7 zum unverzüglichen Übertragen wenigstens einer Teilmenge der von den technischen Objekten empfangenen Daten an den Operator Station Server 2 (Schritt II). In Reaktion auf den empfangenen Trigger überträgt der Datenübertragungsdienst 10 unverzüglich wenigstens eine Teilmenge der von den technischen Objekten empfangenen Daten an den Operator Station Server 2 (Schritt III). Die Alarmmeldung und die dazugehörigen Daten werden dem Operator visuell dargestellt (Schritt IV).

Obwohl die Erfindung im Detail durch das bevorzugte Ausführungsbeispiel und die Figuren näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem (1) für eine technische Anlage, welches wenigstens einen Operator Station Server (2) und ein Automatisierungsgerät (7) aufweist,
wobei das Automatisierungsgerät (7) dazu ausgebildet ist, zur Laufzeit der technischen Anlage Daten von mit dem Automatisierungsgerät (7) verbindbaren technischen Objekten zu empfangen,
und wobei das Automatisierungsgerät (7) einen Datenübertragungsdienst (10) aufweist, der dazu ausgebildet ist, beim Vorliegen eines oder mehrerer bestimmter Ereignisse eine ereignisorientierte Übertragung der von den technischen Objekten empfangenen Daten an den Operator Station Server (2) vorzunehmen,
und wobei das Automatisierungsgerät (7) einen Alarmüberwachungsdienst (11) aufweist, der dazu ausgebildet ist, die Daten zur Laufzeit der technischen Anlage hinsichtlich eines Alarmkriteriums zu überwachen und, für den Fall, dass das Alarmkriterium erfüllt ist, eine Alarmmeldung zu erzeugen und an den Operator Station Server (2) zu übermitteln,
**dadurch gekennzeichnet, dass**
der Alarmüberwachungsdienst dazu ausgebildet ist, den ereignisorientierten Datenübertragungsdienst (10) für den Fall, dass das Alarmkriterium erfüllt ist, zum unverzüglichen Übertragen wenigstens einer Teilmenge der von den technischen Objekten empfangenen Daten zu triggern,
und dass der Datenübertragungsdienst (10) dazu ausgebildet ist, in Reaktion auf den empfangenen Trigger eine unverzügliche Übertragung wenigstens einer Teilmenge der von den technischen Objekten empfangenen Daten an den Operator Station Server (2) vorzunehmen.

2. Leitsystem (1) nach Anspruch 1, bei dem der Alarmüberwachungsdienst (11) dazu ausgebildet ist, den ereignisorientierten Datenübertragungsdienst (10) für den Fall, dass das Alarmkriterium erfüllt ist, zum unverzüglichen Übertragen derjenigen von den technischen Objekten empfangenen Daten zu triggern, die von der Alarmmeldung betroffen sind,
und bei dem der Datenübertragungsdienst (10) dazu ausgebildet ist, in Reaktion auf den empfangenen Trigger eine unverzügliche Übertragung derjenigen von den technischen Objekten empfangenen Daten, die von der Alarmmeldung betroffen sind, an den Operator Station Server (2) vorzunehmen.

3. Leitsystem (1) nach einem der Ansprüche 1 oder 2, bei dem ein Ereignis für die ereignisorientierte Übertragung der von den technischen Objekten empfangenen Daten an den Operator Station Server (2) ein hinreichend großer Betrag einer Änderung der Daten seit einer vorherigen Übertragung darstellt.

4. Leitsystem (1) nach einem der Ansprüche 1 bis 3, bei dem ein Ereignis für die ereignisorientierte Übertragung der von den technischen Objekten empfangenen Daten an den Operator Station Server (2) ein Ablauf einer bestimmten Zeitspanne seit einer vorherigen Übertragung darstellt.

5. Leitsystem (1) nach einem der Ansprüche 1 bis 4, bei dem ein Ereignis für die ereignisorientierte Übertragung der von den technischen Objekten empfangenen Daten an den Operator Station Server (2) ein hinreichend großer Betrag einer Summe von Änderungen der Daten seit einer vorherigen Übertragung darstellt.

6. Leitsystem (1) nach einem der vorangegangenen Ansprüche, bei dem die Alarmmeldung im Wesentlichen nur eine Information darüber umfasst, dass das betreffende Alarmkriterium erfüllt ist.

7. Verfahren, umfassend:
a) Zu einer Laufzeit einer technischen Anlage Überwachen von Daten technischer Objekte der technischen Anlage durch einen Alarmüberwachungsdienst (11) eines Automatisierungsgerätes (7) eines Leitsystems (1) der technischen Anlage hinsichtlich eines Alarmkriteriums,
b) Für den Fall, dass das Alarmkriterium erfüllt ist, Erzeugen und Übermitteln einer Alarmmeldung von dem Alarmüberwachungsdienst des Automatisierungsgerätes (7) an den Operator Station Server (2),
c) Für den Fall, dass das Alarmkriterium erfüllt ist, Triggern eines Datenübertragungsdienstes (10) des Automatisierungsgerätes (7) zum unverzüglichen Übertragen wenigstens einer Teilmenge der von den technischen Objekten empfangenen Daten durch den Alarmüberwachungsdienst (11),
d) In Reaktion auf den empfangenen Trigger, unverzügliche Übertragung wenigstens einer Teilmenge der von den technischen Objekten empfangenen Daten an den Operator Station Server (2) durch den Datenübertragungsdienst (10) des Automatisierungsgerätes (7) des Leitsystems (1) der technischen Anlage.

8. Verfahren nach Anspruch 7, bei dem im Verfahrensschritt c für den Fall, dass das Alarmkriterium erfüllt ist, ein Triggern des Datenübertragungsdienstes (10) des Automatisierungsgerätes (7) zum unverzüglichen Übertragen derjenigen von den technischen Objekten empfangenen Daten, die von der Alarmmeldung betroffen sind, durch den Alarmüberwachungsdienst (11) erfolgt,
und bei dem bei dem im Verfahrensschritt d für den Fall, dass das Alarmkriterium erfüllt ist, in Reaktion auf den empfangenen Trigger, eine unverzügliche Übertragung derjenigen von den technischen Objekten empfangenen Daten, die von der Alarmmeldung betroffen sind, an den Operator Station Server (2) durch den Datenübertragungsdienst (10) des Automatisierungsgerätes (7) des Leitsystems (1) der technischen Anlage erfolgt.

9. Verfahren nach Anspruch 7 oder 8, bei dem ein Ereignis für die ereignisorientierte Übertragung der von den technischen Objekten empfangenen Daten an den Operator Station Server (2) ein hinreichend großer Betrag einer Änderung der Daten seit einer vorherigen Übertragung darstellt.

10. Verfahren nach einem der Ansprüche 7 bis 9, bei dem ein Ereignis für die ereignisorientierte Übertragung der von den technischen Objekten empfangenen Daten an den Operator Station Server (2) ein Ablauf einer bestimmten Zeitspanne seit einer vorherigen Übertragung darstellt.

11. Verfahren nach einem der Ansprüche 7 bis 10, bei dem ein Ereignis für die ereignisorientierte Übertragung der von den technischen Objekten empfangenen Daten an den Operator Station Server (2) ein hinreichend großer Betrag einer Summe von Änderungen der Daten seit einer vorherigen Übertragung darstellt.

12. Verfahren nach einem der Ansprüche 7 bis 11, bei dem die Alarmmeldung im Wesentlichen nur eine Information darüber umfasst, dass das betreffende Alarmkriterium erfüllt ist.

13. Verwendung eines Leitsystems (1) gemäß einem der Ansprüche 1 bis 6 zum Betrieb einer technischen Anlage.
